# NEUE EUROPÄISCHE PATENTSCHRIFT

(11) **EP 1 097 807 B2**
(45) Veröffentlichungstag und Bekanntmachung des Hinweises auf die Entscheidung über den Einspruch: **19.01.2011**
(45) Hinweis auf die Patenterteilung: 29.09.2004
(21) Anmeldenummer: 00123867.4
(22) Anmeldetag: 02.11.2000
(51) Int. Cl.: B32B 19/00, B32B 13/14, C09K 21/02, E04B 1/94

(54) **Gebundenes Mineralwolleprodukt mit Feuerschutzfunktion sowie Brandschutzelement mit dem gebundenen Mineralwolleprodukt**
Fire protecting bound mineral wool product and fire protection element comprising said product
Produit pour la protection contre le feu à base de laine minérale lié et élément pour la protection contre le feu comprenant ledit produit

(30) Priorität: 03.11.1999 DE 19952931
(43) Veröffentlichungstag der Anmeldung: 09.05.2001
(73) Patentinhaber: Saint Gobain Isover G+H Aktiengesellschaft, 67059 Ludwigshafen (DE)
(72) Erfinder: Bihy, Lothar, 67657 Kaiserslautern (DE); Keller, Horst, 69259 Wilhelmsfeld (DE)
(74) Vertreter: Kuhnen & Wacker

(56) Entgegenhaltungen:
- EP-A- 0 353 540
- EP-A- 0 485 867
- EP-A- 0 601 182
- EP-A- 0 741 003
- WO-A-99/51536
- BE-A- 900 741
- US-A- 4 282 687

## Beschreibung

Die vorliegende Erfindung betrifft ein Brandschutzelement nach Anspruch 1 und die Verwendung des Brandschutzelements nach Anspruch 12.

Die Feuerwiderstandsfähigkeit eines Brandschutzelements wird durch die Zeitdauer bestimmt, bei der bei einem bestimmten Temperaturanstieg an einer Seite des Brandschutzelements, beispielsweise einer Feuerschutztüre, die andere "kalte" Seite des Brandschutzelements unter einer definierten Grenztemperatur bleibt. Die Zeitdauer in Minuten bis zum Erreichen der Grenztemperatur auf der kalten Seite wird als Standzeit bezeichnet und bestimmt nach DIN 4102 Teil 5 die Einstufung in die verschiedenen Feuerwiderstandsklassen. So bedeutet eine Einstufung in die Feuerwiderstandsklasse F30 eine 30-minütige Standzeit, entsprechend F90 eine 90-minütige Standzeit.

Durch Wärmedämmaßnahmen allein, wie beispielsweise durch den Einsatz von gebundenen Mineralwolleelementen, kann nur eine begrenzte Verzögerung des Temperaturanstiegs auf der kalten Seite erzielt werden. Wollte man allein durch Wärmedämmaßnahmen die Anforderungen von DIN 4102 Teil 5 z.B. für ein F90 Brandschutzelement erreichen, müßten z.B. Feuerschutztüren aufgrund der erforderlichen Stärke der Wärmedämmelemente in einer Dicke gefertigt werden, die den praktischen Erfordernissen nicht gerecht wird. Dazu kommt, daß das derzeit am häufigsten eingesetzte, auch für hohe Temperaturen geeignete Wärmedämmaterial, nämlich Mineralwolle in Form von Steinwolle, unter den hohen Temperaturen, die während eines Brandes auftreten, von der "heißen" Seite ausgehend zusammensintert und dabei relativ rasch seine Wirksamkeit als Wärmedämmaterial einbüßt, so daß auch aus diesem Grunde relativ große Wandstärken erforderlich wären, wollte man die Anforderungen an den Feuerwiderstand von Brandschutzelementen ausschließlich durch Wärmedämmung zu erreichen suchen. Schließlich weist Mineralwolle eine relativ geringe Wärmekapazität auf und kann daher auch durch eigene Wärmeaufnahme den Temperaturanstieg auf der kalten Seite des Brandschutzelements nur unzureichend verzögern.

Zur Erzielung eines hohen Feuerwiderstandes von Brandschutzelementen werden daher gegenwärtig Elemente verwendet, bei denen Wärmedämmeinlagen aus Steinwolle mit Brandschutzmitteln kombiniert sind, deren Wärmeaufnahmekapazität dadurch wesentlich erhöht ist, daß im Brandfalle bei dem damit verbunden Temperaturanstieg endotherme chemische und/oder physikalische Reaktionen, wie beispielsweise Phasenumwandlungen und/oder die Abgabe von physikalisch und/oder chemisch gebundenem Wasser ablaufen. Durch die bei erhöhter Temperatur ablaufenden endothermen Vorgänge wird Wärme verbraucht und so die Erwärmung des Brandschutzelements auf der kalten Seite über die benötigte Zeitdauer verhindert bzw. verzögert.

Als geeignete Brandschutzmittel sind z.B. Hydroxide wie Aluminium- und Magnesiumhydroxid bekannt, die sich bei erhöhten Temperaturen unter Wasserabgabe über Zwischenstufen endotherm bis zu den entsprechenden Oxiden umwandeln können.

Die EP 0 601 182 A1 beschreibt eine anorganische Bauplatte mit einem Mittelschichtteil, an dessen beiden Oberflächen jeweils Außenschichtteile angeordnet sind, wobei in allen Schichten Mineralfasern vorliegen und in einer Ausführungsform zudem in homogener Verteilung Aluminiumhydroxid eingebunden ist.

Ferner offenbart DE 40 36 088 A1 ein Brandschutzmittel aus Metallhydroxid und einem Magnesiabinder, das in wässerig pastöser Form auf einen Körpern aus gebundener Mineralwolle aufgebracht werden kann, wobei durch Aufbringen eines weiteren Körpers aus Mineralwolle auf die Brandschutzmittelschicht ein Brandschutzelement hergestellt werden kann, das zum Schutz gegen die Folgen eines Brandes von beiden Seiten des Brandschutzelements geeignet ist, wie dies beispielsweise bei Feuerschutztüren gefordert wird. Wie die Erfahrung gezeigt hat, ist es nämlich vorteilhaft, wenn auf der "heißen" Seite des Brandschutzelements im Falle eines Brandes erst eine Wärmedämmschicht vorhanden ist, hinter der eine Brandschutzmittelschicht angeordnet ist.

In EP 0 741 003 wird ein - in der Praxis sehr bewährtes - Brandschutzelement mit Lagenstruktur offenbart, das zumindest zwei äußere Lagen aus gebundener Mineralwolle und zumindest eine mittlere Lage aus anorganischem Material umfaßt, wobei die mittlere Lage aus einem solchen anorganischen Material besteht, das bei Temperatureinwirkung Wasser abspaltet und formstabil bleibt und als vorgefertigtes Halbzeug zwischen die äußeren Lagen aus gebundener Mineralwolle angeordnet ist. Durch die in EP 0 741 003 A1 offenbarte Lehre kann im Vergleich zur - sich in der Praxis ebenfalls bewährten - Lehre von DE 40 36 088 A1 ein Brandschutzelement einfacher und preiswerter hergestellt werden, da die als Brandschutzmasse dienende mittlere Lage aus anorganischem Materials für sich als Halbzeug separat hergestellt und dann als selbständig handelbare Platte zwischen die Lagen aus gebundener Mineralwolle angeordnet werden kann. Damit können die Fertigungsbereiche hinsichtlich der Mineralwolleplatten und der Brandschutzmasse entkoppelt werden, so daß die Taktzeiten für die Fertigung nicht mehr aufeinander abgestimmt werden müssen. Ein weiterer Vorteil des Brandschutzelements nach EP 0 741 003 ist, daß keine Durchfeuchtung der Mineralwolleplatten durch das Aufbringen einer pastösen Brandschutzmasse mehr erfolgt, die durch Trocknungsenergie bzw. mittels längerer Lagerung wieder beseitigt werden müßte.

Aus der WO 99/51536 sind Mineralwollevliese und Verfahrensweisen zu deren Herstellung bekannt geworden. Es handelt sich hierbei um ein Vlies mit zwei Außenseitenabschnitten und einem Kernabschnitt, welche untereinander integriert sind, und bei dem die Konzentration eines Additivmaterials im Kernabschnitt größer als die Konzentration des Additivmaterials in jedem der außenseitigen Abschnitte ist. Das Additivmaterial kann dabei feuerhemmend ausgebildet sein, wobei bevorzugt Magnesiumhydroxid eingesetzt wird. Dieser Stand der Technik betrifft ferner verschiedene Verfahrensweisen zur Herstellung eines solchen integrierten Mineralwollevlieses, wobei das Additivmaterial entweder bereits im Fallschacht in die Faserwolke eingebracht oder auf eine Oberfläche einer Primärbahn aufgebracht wird, wobei die Primärbahn dann durch Pendelablage zu einer Sekundärbahn aufgependelt wird.

Nachteil des bisherigen Stands der Technik ist jedoch in jedem Fall, daß als Brandschutzmasse eine relativ große Menge an anorganischem wasserabspaltendem Material in Form eines wasserabspaltenden Hydroxids, wie beispielsweise Aluminiumhydroxid verwendet werden muß, wenn die Anforderungen an ein Brandschutzelement bezüglich geringer Wandstärke, geringem Gewicht und ausreichenden Standzeiten, insbesondere im Bereich der Brandschutzklassen F60 und F90 gemäß der DIN-Norm 4102 Teil 5 erfüllt werden sollen. Die notwendige Verwendung dieser größeren Menge an wasserabspaltendem Hydroxid macht die Herstellung der Brandschutzelemente nach dem Stand der Technik relativ teuer.

Ausgehend von diesem Stand der Technik ist es Aufgabe der vorliegenden Erfindung, ein Brandschutzelement, insbesondere zur Erfüllung der Anforderungen der DIN-Norm 4102 Teil 5 für Brandschutzelemente der Feuerschutzklassen F60 und F90 zu schaffen, das preiswerter und einfacher als bisherige Brandschutzelemente der gleichen Brandschutzklassen hergestellt werden kann.

Die Lösung dieser Aufgabe erfolgt durch die Merkmale des Anspruchs 1.

Gemäß Anspruch 1 wird ein Brandschutzelement mit Lagenstruktur, insbesondere als Einlage für Feuerschutztüren und Feuerschutzschränke zur Verfügung gestellt, mit zumindest einer Lage aus gebundener Mineralwolle und zumindest einer Lage aus anorganischem Material, das dadurch gekennzeichnet ist, daß die Lage aus gebundener Mineralwolle ein gebundenes Mineralwolleprodukt ist und die Lage aus anorganischem Material überwiegend aus Gips besteht.

Das erfindungsgemäße Brandschutzelement hat im Vergleich zu den bisherigen Brandschutzelementen, die die Anforderungen insbesondere der DIN-Norm 4102 Teil 5 bezüglich der Feuerschutzklassen F60 und F90 erfüllen, den Vorteil, daß durch den Ersatz eines Großteils des bisher benötigten wasserabspaltenden Hydroxids durch Gips eine erhebliche Kosteneinsparung möglich wird. Sämtliche bisherigen Versuche, relativ kostspieliges wasserabspaltendes Hydroxid durch preiswerteren Gips zu ersetzen, führten nicht zu dem gewünschten Ergebnis, nämlich Brandschutzelemente zur Verfügung zu stellen, die sowohl eine adäquate Gesamtstärke, ein geringes Gewicht und die nötigen Standzeiten in sich vereinigen.

Zwar besitzt Gips die Eigenschaft, wie die bisher verwendeten Metallhydroxide, unter Wärmeeinwirkung endotherm Wasser abzuspalten. Auch setzt die Wasserabspaltung unter Wärmeeinwirkung in etwa bei denselben Temperaturen ein, wie dies bei den bisher verwendeten Metallhydroxiden der Fall ist, jedoch verläuft die endotherme Umwandlung von Gips unter Wärmeeinwirkung rascher, als dies bei den als Brandschutzmittel verwendeten Metallhydroxiden der Fall ist. Dies hat dem Nachteil, daß die Wärmerückhalte-Kapazität von Gips rascher verbraucht ist, als dies bei den Metallhydroxiden der Fall ist. Dieser Nachteil von Gips hätte bisher nur durch eine Erhöhung dessen Schichtstärke ausgeglichen werden können, was jedoch dem Brandschutzelement ein in den meisten Fällen nicht zu akzeptierendes Gewicht sowie nicht zu akzeptierende Abmessungen verliehen hätte.

Überraschenderweise wurde nun gefunden, daß mit einem Brandschutzelement, das zumindest eine Lage aus gebundenem Mineralwolleprodukt sowie zumindest eine Lage überwiegend aus Gips enthält, Brandschutzelemente erhalten werden, die Feuerschutzeigenschaften besitzen, die denen von Brandschutzelementen, die neben zumindest einer Lage aus gebundener Mineralwolle ohne Brandschutzmittel und zumindest einer dickeren Lage aus wasserabspaltendem Hydroxid enthalten, zumindest ebenbürtig sind, obwohl die ersteren nur relativ geringe Mengen an wasserabspaltendem Hydroxid in zumindest einer diskreten Schicht enthalten.

Werden bei Brandschutzelementen, die nach der Lehre von EP 0 741 003 gefertigt werden, in der mittleren Schicht in etwa 6 bis 7 kg/m² Metallhydroxid verwendet, um die Anforderungen an ein Brandschutzelement der Brandschutzklasse F90 zu erhalten, werden zur Einhaltung der Anforderungen der F90 Brandschutzklasse im erfindungsgemäßen Brandschutzelement nur 0,2 kg/m² bis 3,0 kg/m², insbesondere 0,2 kg/m² bis 1,5 kg/m², bevorzugt 0,4 kg/m² bis 0,8 kg/m² Metallhydroxid benötigt, was eine erhebliche Einsparung bedeutet.

Bei dem erfindungsgemäßen Brandschutzelement kann daher im Vergleich zu dem bisherigen Brandschutzelementen nach dem Stand der Technik ein Großteil des bisher verwendeten Metallhydroxids durch preiswerteren Gips substituiert werden, ohne daß eine Verschlechterung in Bezug auf die Standzeiten beobachtet werden. Durch diese Substitution ist es möglich, im Vergleich zum bisherigen Stand der Technik deutlich preiswertere Brandschutzelemente herzustellen, ohne daß im Vergleich zu den Brandschutzelementen nach dem Stand der Technik irgendwelche Nachteile in Kauf genommen werden müßten.

Gemäß Anspruch 1 enthält das Brandschutzelement ein gebundenes Mineralwolleprodukt, insbesondere eine Mineralwolleplatte, mit Brandschutzeigenschaften, in dem wenigstens in einer diskreten Schicht ein unter Wärmeeinwirkung wasserabspaltender Stoff in form eines unter Wärmeeinwirkung wasserabspaltenden Hydroxids, integriert zwischen den Mineralwollefasern angeordnet ist. Handelt es sich bei dem fertigen gebundenen Mineralwolleprodukt um eine ebene Mineralwolleplatte, wird die Schicht aus wasserabspaltendem Stoff regelmäßig in etwa in einer ebenen Schicht in dem Mineralwolleprodukt angeordnet sein. Es sind jedoch auch Ausführungsformen denkbar, in denen der wasserabspaltende Stoff in nicht-ebenen Schichten in dem Mineralwolleprodukt vorhanden ist, selbst wenn das Mineralwolleprodukt selbst eben ist.

Als unter Wärmeeinwirkung wasserabspaltender Stoff wird ein hydroxid verwendet. Unter den Hydroxiden ist aufgrund seiner Verfügbarkeit, seines Preises und seiner Eigenschaften gegenwärtig Aluminiumhydroxid bevorzugt, jedoch kann jedes andere geeignete Metallhydroxid als erfindungsgemäßer, unter Wärmeeinwirkung wasserabspaltender Stoff Verwendung finden.

Nach dem bisherigen Stand der Technik sind Brandschutzelemente, insbesondere solche, die die Anforderungen der Brandschutzklassen F60 und F90 einhalten sollen, durch einen lagenartigen Aufbau derart gekennzeichnet, daß angrenzend zu zumindest einer Lage aus bereits gebundener Mineralwolle zumindest eine Lage aus Brandschutzmittel, z.B. in Form von unter Wärmeeinwirkung wasserabspaltendem Hydroxid, vorhanden ist. Wenn dabei das Brandschutzmittel in pastöser Form auf die bereits gebundene Mineralwolleschicht aufgebracht wird, hat dies den Nachteil, daß zur Fertigstellung des Brandschutzelements eine zusätzliche, wenn auch nur kurzzeitige Erwärmung zum Starten der Abbindereaktion des Brandschutzmittel oder eine längere Trocknungsdauer vonnöten ist.

Wenn, wie dies ebenfalls nach dem Stand der Technik möglich ist, das Brandschutzmittel in Form eines vorgefertigten Halbzeugs, vorzugsweise in Plattenform, mit mindestens einer Lage aus gebundener Mineralwolle kombiniert wird, muß das Problem der dauerhaften Verbindung zwischen dem Halbzeug und der gebundenen Mineralwolle gelöst werden, um ein haltbares Produkt zu erzeugen.

Demgegenüber hat das gebundene Mineralwolleprodukt für das Brandschutzelement nach Anspruch 1 den Vorteil, daß das Brandschutzmittel in zumindest einer relativ dünnen diskreten Schicht zwischen den Mineralwollefasern angeordnet ist. Dies hat zum einen den Vorteil, daß sich die dünne(n) Schicht(en) aus unter Wärmeeinwirkung wasserabgebendem Hydroxid durch die sie umgebenden relativ dicken Mineralwollefaserschicht(en) unter Wärmeeinwirkung nicht stark verformen kann bzw. können. Daneben bestehen keinerlei Probleme hinsichtlich des dauerhaften Verbundes zwischen der gebundenen Mineralwolle und dem Brandschutzmittel, da letzteres fest zwischen den Mineralwollefasern integriert ist. Des weiteren hat sich gezeigt, daß das Mineralwolleprodukt Wärmerückhalteeigenschaften zeigt, die deutlich besser sind, als dies bei einem gebundenen Mineralwolleprodukt der Fall wäre, in dem das Brandschutzmittel homogen in der Mineralwolle verteilt vorliegt, also nicht auf diskrete Schicht(en) konzentriert ist bzw. sind.

Dabei ist eine zusätzliche Wärmedämmschicht vorhanden. Damit ist es möglich, das Verhältnis von unter Wärmeeinwirkung wasserabspaltendem Hydroxid und Wärmedämmschicht jeweils individuell auf die gegebenen Anforderungen anzupassen.

Vorteilhafte Weiterbildungen und Ausgestaltungen des Brandschutzelements nach Anspruch 1 werden durch die auf ihn rückbezogenen Unteransprüche zur Verfügung gestellt.

Das erfindungsgemäße Brandschutzelement nach Anspruch 2 ist insbesondere dort von Vorteil, wo es gegen Feuer von beiden Seiten schützen soll. In diesem Falle sollte nämlich der unter Wärmeeinwirkung wasserabspaltende Stoff von beiden Seiten durch eine angemessene Wärmedämmschicht abgedeckt sein, um das Einsetzen der Wasserabspaltung in jedem Fall so lange wie möglich hinauszuzögern.

Das Brandschutzelement nach Anspruch 3 hat den Vorteil, daß durch das Wasserglas, Kieselsol und/oder den Magnesiabinder eine noch bessere Haftung des wasserabspaltenden Hydroxids untereinander und/oder an den Mineralwollefasern erreicht werden kann. Durch die Ansprüche 4 und 5 werden geeignete Mischungen aus wasserabspaltendem Hydroxid und Magnesiabinder zur Verfügung gestellt, wie sie erfindungsgemäß Verwendung finden können.

Die Aufbringung des unter Wärmeeinwirkung wasserabspaltenden Hydroxids in streifen-, insbesondere mäander- oder zick-zack-, und/oder punktförmiger Form nach Anspruch 7 hat den Vorteil, daß bei der nach der Auftragung des Brandschutzmittels erfolgenden Wärmebehandlung zur Aushärtung des Bindemittels, die in aller Regel mittels Heißluft erfolgt, der Durchtritt der Heißluft durch das ganze Produkt erfolgen kann.

Wenn die streifen- und/oder punktförmige Auftragung des unter Wärmeeinwirkung wasserabspaltenden Stoffs gewählt wird, muß, soll dieselbe Menge an Brandschutzmittel im Endprodukt vorhanden sein wie bei einer flächigen Auftragung, das Brandschutzmittel in den Streifen und/oder Punkten entsprechend dicker aufgetragen werden als dies bei der flächigen Verteilung der Fall ist. Dies kann den Vorteil haben, daß das Hydroxid unter Wärmeeinwirkung nicht nur Wasser abspaltet, sondern auch in der ihn umgebenden Mineralwolle seine gerüstartige Struktur beibehält, was zur räumlichen Stabilisierung des Brandschutzelements beitragen kann.

Das Brandschutzelement nach Anspruch 1 weist Gips in einer Schichtdicke auf, wie sie für Brandschutzelemente benötigt wird, die den Anforderungen der Brandschutzklasse F90 nach DIN-Norm 4102 Teil 5 genügt. In der Praxis kann und wird für die verschiedenen Brandschutzklassen, z.B. für die Brandschutzklassen F60 und F90, durch jeweils optimale Auswahl der Rohdichte und Dicke der verwendeten Mineralwolle, der Menge des Eintrags an wasserabspaltendem Stoff und der Stärke des verwendeten anorganischen Materials im Wege einer Grenzwertbetrachtung eine Kostenoptimierung für das erfindungsgemäße Brandschutzelement erreicht werden.

Durch die Verwendung von feuerfestem Gipskarton für die Gipsschicht nach Anspruch 9 wird selbst unter extremen Bedingungen sichergestellt, daß die Gipsschicht sich durch die Wärmeeinwirkung nicht stark verformt und/oder keine starken Risse ausbildet. Das Brandschutzelement nach Anspruch 10 ist besonders bevorzugt, wenn es als Einlage für Feuerschutztüren und/oder Feuerschutzschränke verwendet werden soll. Das gebundene Mineralwolleprodukt und das erfindungsgemäße Brandschutzelement kann jedoch beliebige Formen haben bzw. kann in jeder beliebigen Form hergestellt werden, um so zum Schutz gegen Feuer und Hitze in den verschiedensten denkbaren Anwendungsgebieten zu dienen, wie beispielsweise beim Schutz von bzw. vor technischen Anlagen, in Kaminkonstruktionen, in Innenwänden, in Lüftungskanälen und in Kabelschotts. Sowohl bei plattenförmigen wie auch bei beliebig geformten erfindungsgemäßen Brandschutzelementen kann das anorganische Material, das überwiegend aus Gips besteht, nicht nur in Form einer Lage sondern auch in Form einer Schicht vorliegen bzw. aufgebracht werden. So kann bei der Herstellung eines erfindungsgemäßen Brandschutzelements das anorganische Material auch als pastöse Masse auf ein erfindungsgemäßes Mineralwolleprodukt aufgetragen werden, die anschließend getrocknet wird bzw. trocknen gelassen wird.

Das Brandschutzelement nach Anspruch 11 hat den Vorteil, daß es z.B. in Feuerschutztüren eingesetzt werden kann, bei denen von beiden Seiten der Türe in der Regel ein gleich guter Schutz gegen Feuer gegeben sein muß. Bei einem Brandschutzelement nach Anspruch 11, trifft, wenn es als Einlage in Feuerschutztüren ausgestaltet ist, im Brandfalle die durch das Feuer verursachte Wärmestrahlung erst nach Durchdringung einer ersten Mineralwolleschicht hindurch auf das Brandschutzmittel in Form eines wasserabspaltenden Stoffs. Dieser beginnt ab einer gewissen Temperatur mit der Wasserabspaltung. Durch den damit verbundenen Energieverbrauch und die Wärmedämmeigenschaften der den Stoff umgebenden Mineralwolle wird die Strahlungswärme von der dahinter liegenden Schicht aus Gips für eine gewisse Zeit abgehalten.

Erst wenn der Haltepunkt des wasserabspaltenden Stoffs in der dem Feuer zugewandten Seite überschritten wird (wasserabgabe beendet), steigt die Temperatur hinter der ersten Schicht aus Hydroxid so weit an, daß auch in der Lage aus Gips die endotherme Wasserabspaltung beginnt. Ist die Fähigkeit zur Wasserabspaltung auch in der Lage aus Gips erschöpft, wird die dem Feuer abgewandte Mineralwolle mit Hitze beaufschlagt. In dieser Mineralwollelage b innt ie endotherme Wasserabspaltung aus dem auch in dieser Schicht integrierten Hydroxid und der Temperaturanstieg auf der "kalten" Seite des Brandschutzelements wird nochmals verzögert. Durch diese drei Kühlsysteme ist es möglich, Türeinlagen für Feuerschutztüren zu konstruieren, die die Anforderungen der Feuerschutzklassen F60 und F90 entsprechen und die gleichzeitig erheblich preiswerter herzustellen sind, als dies nach dem Stand der Technik möglich war.

Wie sich gezeigt hat, ist die inhomogene, in diskreten Schichten vorliegende Verteilung des Stoffs notwendig, um die erfindungsgemäßen Vorteile zu erhalten. Ist der Stoff nämlich homogen zwischen den Mineralwollefasern in der fertiggestellten Mineralwollebahn verteilt, wird zwar ein im Vergleich zu einem Mineralwolleprodukt mit gleicher Stärke, bei der aber kein unter Wärmeeinwirkung wasserabspaltender Stoff vorhanden ist, bei Brandversuchen eine Verlangsamung des Temperaturanstiegs auf der kalten Seite erreicht. Der Temperaturanstieg wird überraschenderweise jedoch noch einmal deutlich verlangsamt, wenn die erfindungsgemäße diskrete Stoffverteilung in dem Mineralwolleprodukt vorliegt.

Weitere Einzelheiten, Merkmale und Vorteile der vorliegenden Erfindung ergeben sich aus der nachfolgenden Beschreibung eines Ausführungsbeispiels und anhand einer Zeichnung.
- Fig.: 1 zeigt einen Abschnitt eines erfindungsgemäßen Brandschutzelements mit Lagenstruktur
- Fig. 2: zeigt eine weitere Ausführungsform des erfindungsgemäßen Brandschutzele- ments nach Fig. 1 und
- Fig. 3: zeigt in einem Zeit/Temperaturdiagramm den Temperaturverlauf an der "kalten" Seite eines erfindungsgemäßen Brandschutzelements im Vergleich zu einem Brandschutzelement ohne unter Wärmeeinwirkung wasserabspaltenden Stoff in den Mineralwolleschichten.

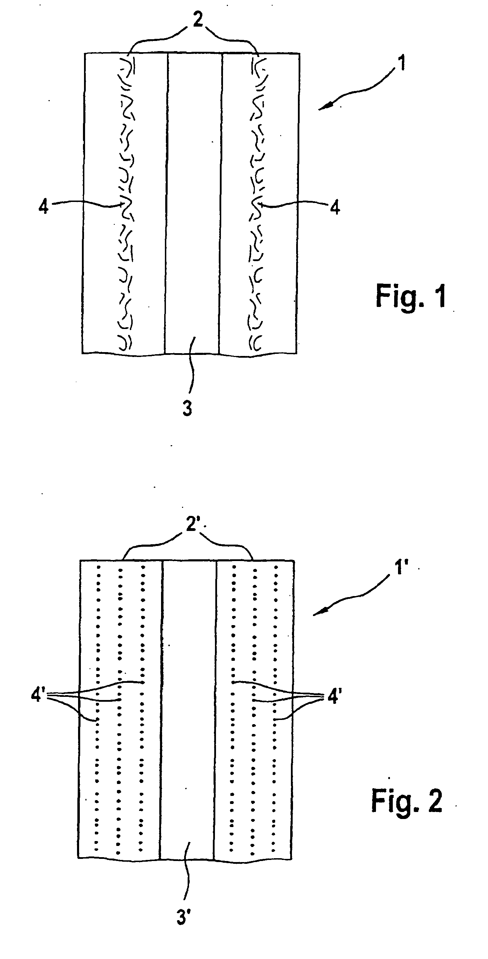

Fig. 1 der Zeichnung zeigt einen Abschnitt eines erfindungsgemäßen Brandschutzelements 1 im Querschnitt. Das hier beispielhaft dargestellte Brandschutzelement, das als Einlage für eine Feuerschutztür dienen kann, weist zwei Lagen aus gebundener Mineralwolle 2 auf, zwischen denen sich eine Schicht 3 überwiegend aus Gips befindet. In den Lagen aus gebundener Mineralwolle 2 ist jeweils eine Schicht aus unter Wärmeeinwirkung wasserabspaltendem Stoff 4 inkorporiert.

Fig. 2 der Zeichnung zeigt einen Abschnitt einer weiteren Ausführungsform eines erfindungsgemäßen Brandschutzelements 1' im Querschnitt. In dieser Ausführungsform ist der unter Wärmeeinwirkung wasserabspaltende Stoff in mehreren diskreten Schichten 4' in den Lagen aus gebundenen Mineralwolle 2' vorhanden. Wie beim Brandschutzelement nach Fig. 1 ist zwischen den Lagen aus gebundener Mineralwolle 2' eine Lage aus Gips 3' vorgesehen. Wie bereits beschrieben wurde, ist die Verteilung des wasserabspaltenden Stoffs in den diskreten Schichten 4' vorzugsweise streifen- und/oder punktförmig vorgesehen.

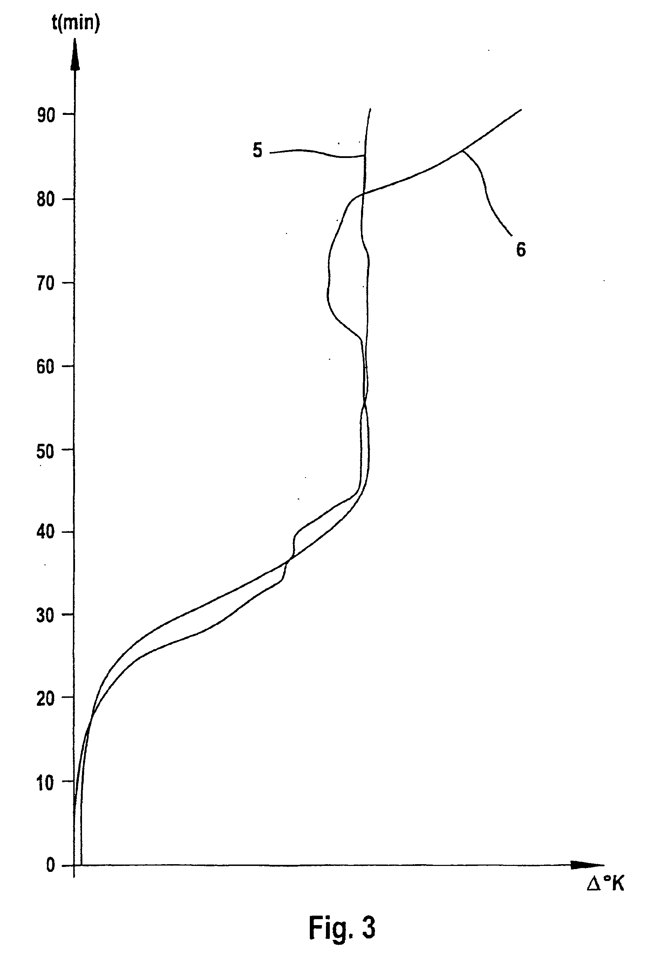

Fig. 3 der Zeichnung zeigt den Temperaturverlauf an der "kalten" Seite eines erfindungsgemäßen Brandschutzelements gemäß Beispiel 1 (Kurve 5) im Vergleich zu einem Brandschutzelement gemäß Vergleichsbeispiel 2 (Kurve 6) über einen Versuchszeitraum von etwas mehr als 90 Minuten. Während die beiden untersuchten Brandschutzelemente im Bereich von 0 bis 60 Minuten ein nahezu paralleles Temperaturverhalten zeigen, setzt bei dem Brandschutzelement gemäß Vergleichsbeispiel 2 danach eine meßbare Abkühlung an der kalten Seite ein, die bis etwa zur achtzigsten Minute anhält. Diese Abkühlung erfolgt aufgrund einer massiven Wasserabgabe durch die Gipsschicht in dem Brandschutzelement gemäß Vergleichsbeispiel 2. Ab etwa der achtzigsten Versuchsminute ist der Haltepunkt der Gipsschicht verbraucht und es kommt zu einem raschen Anstieg der Temperatur auf der kalten Seite des Brandschutzelements, so daß am Versuchsende die zulässige maximale Temperaturerhöhung überschritten ist.

Demgegenüber bleibt die Temperatur an der kalten Seite des erfindungsgemäßen Brandschutzelements auch zwischen der sechzigsten bis zum Ende des Versuchs nach etwa 90 Minuten nahezu völlig konstant. Auch zum Ende des Versuchs hin sind noch keine Anzeichen für eine Erschöpfung des erfindungsgemäßen Brandschutzelements erkennbar, obwohl es eine deutlich geringere Rohdichte als das Brandschutzelement gemäß Vergleichsbeispiel 2 aufweist.

### Beispiel 1:

Ein erfindungsgemäßes Brandschutzelement mit einem Aufbau aus
a) einer Schicht aus 25 mm Mineralwolle der Rohdichte 180 kg/m³, in der mittig streifenförmig Al(OH)₃ in einer Menge von 0,56 kg/m² inkorporiert ist
b) eine Schicht aus 12,5 mm Gipskarton feuerfest
c) einer Schicht aus 25 mm Mineralwolle der Rohdichte 180 kg/m³, in der mittig streifenförmig Al(OH)₃ in einer Menge von 0,56 kg/m² inkorporiert ist
erfüllt die Anforderungen von DIN 4102 Teil 5 für die Brandschutzklasse T90. Eine Brandprüfung ergab nach 92 min. eine mittlere Temperaturerhöhung von nur 63.3°K.

### Beispiel 2:

Ein erfindungsgemäßes Brandschutzelement mit einem Aufbau aus
a) einer Schicht aus 25 mm Mineralwolle der Rohdichte 210 kg/m³, in der mittig streifenförmig Al(OH)₃ in einer Menge von 0,56 kg/m² inkorporiert ist
b) eine Schicht aus 12,5 mm Gipskarton feuerfest
c) einer Schicht aus 25 mm Mineralwolle der Rohdichte 210 kg/m³, in der mittig streifenförmig Al(OH)₃ in einer Menge von 0,56 kg/m² inkorporiert ist

Beispiel 2 unterscheidet sich von Beispiel 1 nur durch eine erhöhte Rohdichte der verwendeten Mineralwolle. Durch eine höhere Rohdichte wird im Vergleich zu Beispiel 1 ein nochmals geringerer Temperaturanstieg auf der kalten Seite erreicht.

### Vergleichsbeispiel 1:

Ein Brandschutzelement nach EP 0 741 003 mit einem Aufbau aus
a) einer Schicht aus 29 mm Mineralwolle der Rohdichte 180 kg/m³ ohne zusätzliches Brandschutzmittel
b) einer 5 mm starken Brandschutzplatte mit 7,0 kg/m² Al(OH)₃
c) einer Schicht aus 29 mm Mineralwolle der Rohdichte 180 kg/m³ ohne zusätzliches Brandschutzmittel
erfüllt ebenfalls die Forderung die Anforderungen von DIN 4102 Teil 5 für die Brandschutzklasse T90. Eine Brandprüfung ergibt nach ca. 90 min. eine mittlere Temperaturerhöhung von 77°K.

### Vergleichsbeispiel 2:

Ein Brandschutzelement mit einem Aufbau aus
a) einer Schicht aus 25 mm Mineralwolle der Rohdichte 210 kg/m³ ohne zusätzliches Brandschutzmittel
b) einer 12,5 mm starken Gipskartonplatte (feuerfest)
c) einer Schicht aus 25 mm Mineralwolle der Rohdichte 210 kg/m³ ohne zusätzliches Brandschutzmittel
erfüllt die Forderung die Anforderungen von DIN 4102 Teil 5 für die Brandschutzklasse T90 nicht. Eine Brandprüfung ergibt nach ca. 90 min. eine mittlere Temperaturerhöhung von ca. 170°K.

Die Beispiele und die Vergleichsbeispiele wurden so gewählt, daß sich jeweils nahezu eine gleiche Endstärke des Brandschutzelements ergibt. Mit den Brandschutzelementen gemäß den Beispielen 1 und 2 lassen sich ohne weiteres z.B. Brandschutztüren konstruieren, die den Anforderungen der Brandschutzklasse T90 genügen. Auch unter Zuhilfenahme eines Brandschutzelements gemäß Vergleichsbeispiel 1 lassen sich derartige Brandschutztüren herstellen, jedoch ist die Herstellung eines Brandschutzelements gemäß Vergleichsbeispiel 1 wesentlich teurer als die der Brandschutzelemente der Beispiele 1 und 2. Mit Vergleichsbeispiel 2 wird gezeigt, welchen entscheidenden Einfluß der unter Wärmeeinwirkung wasserabspaltende Stoff in der Mineralwolle besitzt. Ein Brandschutzelement gemäß Vergleichsbeispiel 2 zeigt deutlich kürzere Standzeiten als dies bei den vorangegangenen Beispielen der Fall ist und ist daher nicht geeignet als Brandschutzeinlage für eine Feuerschutztür zu dienen, die die Anforderungen der Brandschutzklasse F90 erfüllen muß.

## Patentansprüche

1. Brandschutzelement (1, 1'), insbesondere als Einlage für Feuerschutztüren oder Feuerschutzschränke, mit zumindest einer Lage aus gebundener Mineralwolle und zumindest einer Lage (3, 3') aus anorganischem Material,
wobei die Lage aus gebundener Mineralwolle ein gebundenes Mineralwolleprodukt (2, 2'), insbesondere Mineralwolleplatte, ist, wobei in dem Mineralwolleprodukt (2; 2') ein unter Wärmeeinwirkung wasserabspaltendes Hydroxid, angeordnet ist, wobei der unter Wärmeeinwirkung wasserabspaltende Stoff integriert zwischen den Mineralwollefasern des Mineralwolleprodukts (2; 2') vorliegt und dabei in wenigstens einer diskreten Schicht (4; 4') im Mineralwolleprodukt (2; 2') konzentriert ist, wobei zumindest eine weitere Mineralwolleschicht vorhanden ist, welche keinen unter Wärmeeinwirkung wasserabspaltenden Stoff enthält, und wobei die Lage aus anorganischem Material (3, 3') überwiegend aus Gips besteht.

2. Brandschutzelement nach Anspruch 1, **dadurch gekennzeichnet, daß** die zumindest eine weitere, keinen unter Wärmeeinwirkung wasserabspaltenden Stoff enthaltende Mineralwolleschicht außen angeordnet ist.

3. Brandschutzelement gemäß Anspruch 1 oder 2, **dadurch gekennzeichnet, daß** dem unter Wärmeeinwirkung wasserabspaltenden Stoff ein nicht brennbarer Binder, wie vorzugsweise Wasserglas, Kieselsol und/oder Magnesiabinder zugesetzt ist.

4. Brandschutzelement gemäß Anspruch 3, **dadurch gekennzeichnet, daß** die Mischung aus unter Wärmeeinwirkung wasserabspaltendem Stoff und Magnesiabinder eine Zusammensetzung von 50-90 Gew.%, insbesondere 60-90 Gew.%, vorzugsweise 70-90 Gew.% wasserabspaltendes Hydroxid, vorzugsweise Aluminiumhydroxid, und 5-50 Gew.%, insbesondere 10-40 Gew.%, vorzugsweise 10-30 Gew.% Magnesiabinder, davon vorzugsweise 2,5-25 Gew.%, insbesondere 5-20 Gew.%, vorzugsweise 5-15 Gew.% Magnesiumoxid sowie 2,5-25 Gew.%, insbesondere 5-20 Gew.%, vorzugsweise 5-15 Gew.% Magnesiumsulfat und/oder Magnesiumchlorid aufweist.

5. Brandschutzelement gemäß Anspruch 4, **dadurch gekennzeichnet, daß** die Mischung aus unter Wärmeeinwirkung wasserabspaltendem Stoff und Magnesiabinder eine Zusammensetzung von ca. 80 Gew.% Aluminiumhydroxid, ca. 10 Gew.% Magnesiumoxid und ca 10 Gew.% Magnesiumsulfat aufweist.

6. Brandschutzelement gemäß einem der Ansprüche 1 bis 5, **dadurch gekennzeichnet, daß** das unter Wärmeeinwirkung wasserabspaltende Hydroxid in einer Menge von 0,2 kg/m² bis 3,0 kg/m², insbesondere 0,2 kg/m² bis 1,5 kg/m², bevorzugt 0,4 kg/m² bis 0,8 kg/m² vorhanden ist.

7. Brandschutzelement gemäß einem der Ansprüche 1 bis 6, **dadurch gekennzeichnet, daß** der unter Wärmeeinwirkung wasserabspaltende Stoff bzw. die Mischung aus unter Wärmeeinwirkung wasserabspaltendem Stoff und einem nicht brennbaren Binder, wie vorzugsweise Wasserglas, Kieselsol oder Magnesiabinder in der Ebene streifen-, insbesondere mäander- oder zick-zack-, und/oder punktförmig verteilt ist.

8. Brandschutzelement gemäß einem der Ansprüche 1 bis 7, **dadurch gekennzeichnet, daß** der Gips eine Stärke von 3-20 mm, insbesondere 5-15 mm, vorzugsweise 10-13 mm aufweist.

9. Brandschutzelement gemäß einem der Ansprüche 1 bis 8, **dadurch gekennzeichnet, daß** der Gips als feuerfester Gipskarton vorliegt.

10. Brandschutzelement gemäß einem der Ansprüche 1 bis 9, **dadurch gekennzeichnet, daß** das Brandschutzelement (1, 1`) plattenförmig ist.

11. Brandschutzelement gemäß einem der Ansprüche 1 bis 10, **dadurch gekennzeichnet, daß** das Brandschutzelement (1, 1`) mindestens aus zwei Lagen von gebundenem Mineralwolleprodukt (2, 2') besteht, zwischen denen mindestens eine Lage (3, 3') aus Gips angeordnet ist.

12. Verwendung des Brandschutzelements (1, 1') gemäß einem der Ansprüche 1 bis 11 als Einlage für Feuerschutztüren oder Feuerschutzschränke.

## Claims

1. Fire protection element (1; 1'), in particular as a lining for fire protection doors or fire protection closets, having at least one layer of bound mineral wool and at least one layer (3; 3') of inorganic material,
wherein said layer of bound mineral wool is a bound mineral wool product (2; 2'), in particular mineral wool board, wherein a hydroxide liberating water under the influence of heat is arranged in said mineral wool product (2; 2'),
wherein said substance liberating water under the influence of heat is present being integrated between the mineral wool fibers of said mineral wool product (2; 2') and being concentrated in at least one discrete layer (4; 4') in said mineral wool product (2; 2'), and wherein at least one further mineral wool layer is present which does not contain a substance liberating water under the influence of heat, and
wherein said layer (3; 3') of inorganic material predominantly consists of gypsum.

2. The fire protection element in accordance with claim 1, **characterized in that** said one further mineral wool layer, which does not contain a substance liberating water under the influence of heat, is arranged externally.

3. The fire protection element in accordance with claim 1 or 2, **characterized in that** a non-flammable binder, such as preferably water glass, silica sol, and/or magnesia binder, is added to said substance liberating water under the influence of heat.

4. The fire protection element in accordance with claim 3, **characterized in that** the mixture of substance liberating water under the influence of heat and magnesia binder has a composition of 50-90% (wt.), in particular 60-90% (wt.), preferably 70-90% (wt.) of hydroxide liberating water, preferably aluminum hydroxide, and 5-50% (wt.), in particular 10-40% (wt.), preferably 10-30% (wt.) of magnesia binder, of these preferably 2.5-25% (wt.), in particular 5-20% (wt.), preferably 5-15% (wt.) of magnesia as well as 2.5-25% (wt.), in particular 5-20% (wt.), preferably 5-15% (wt.) of magnesium sulphate and/or magnesium chloride.

5. The fire protection element in accordance with claim 4, **characterized in that** the mixture of substance liberating water under the influence of heat and magnesia binder has a composition of approx. 80% (wt.) of aluminum hydroxide, approx. 10% (wt.) of magnesia, and approx. 10% (wt.) of magnesium sulphate.

6. The fire protection element according to one of claims 1 to 5, **characterized in that** said hydroxide liberating water under the influence of heat is present in a quantity of 0.2 kg/m² to 3,0 kg/m², in particular 0.2 kg/m² to 1.5 kg/m², preferably 0.4 kg/m² to 0.8 kg/m.

7. The fire protection element according to one of claims 1 to 6, **characterized in that** said substance liberating water under the influence of heat, or the mixture of substance liberating water under the influence of heat and a non-flammable binder, such as preferably water glass, silica sol or magnesia binder, is planarly distributed in a stripe shape, in particular in a meander or zig-zag and/or dot shape.

8. The fire protection element according to one of claims 1 to 7, **characterized in that** the gypsum has a thickness of 3-20 mm, in particular 5-15 mm, preferably 10-13 mm.

9. The fire protection element according to one of claims 1 to 8, **characterized in that** the gypsum is present in the form of a fire-resistant gypsum plaster board.

10. The fire protection element according to one of claims 1 to 9, **characterized in that** said fire protection element (1; 1') is board-shaped.

11. The fire protection element according to one of claims 1 to 10, **characterized in that** said fire protection element (1; 1') at least consists of two layers of bound mineral wool product (2; 2'), wherebetween at least one layer (3; 3') of gypsum is arranged.

12. Use of said fire protection element (1; 1') according to one of claims 1 to 11, as a lining for fire protection doors or fire protection closets.

## Revendications

1. Élément de protection contre le feu (1 ; 1') en particulier sous la forme de garniture pour des portes coupe-feu ou des armoires coupe-feu, avec au moins une couche de laine minérale liée et au moins une couche de matériau inorganique (3, 3'), dans lequel la couche de laine minérale liée est un produit en laine minérale liée (2 ; 2') en particulier une plaque de laine minérale, dans lequel est disposée dans le produit en laine minérale (2 ;2') un hydroxyde se déshydratant sous l'effet de la chaleur, la substance se déshydratant sous l'effet de la chaleur se présentant à l'état intégré entre les fibres de laine minérale du produit en laine minérale (2 ; 2') et étant à cette occasion concentrée en au moins une couche discrète (4 ; 4') dans le produit en laine minérale (2 ; 2'), et au moins une autre couche de laine minérale étant présente, laquelle ne contient aucune substance se déshydratant sous l'effet de la chaleur, et dans lequel la couche (3 ; 3') de matériau inorganique se compose principalement de gypse.

2. Élément de protection contre le feu selon la revendication 1, **caractérisé par le fait que** la ou les autres couches de laine minérale ne contenant aucune substance se déshydratant sous l'effet de la chaleur sont disposées de façon externe.

3. Élément de protection contre le feu selon l'une des revendications 1 ou 2, **caractérisé par le fait qu'**un liant non combustible, comme de préférence du verre soluble, du sol de silice et/ou un liant à base de magnésie, est ajouté à la substance se déshydratant sous l'effet de la chaleur.

4. Élément de protection contre le feu selon la revendication 3, **caractérisé par le fait que** le mélange de substance se déshydratant sous l'effet de la chaleur et de liant à base de magnésie présente une composition de 50 à 90 % en poids, en particulier de 60 à 90 % en poids, de préférence de 70 à 90%en poids d'hydroxyde se déshydratant, de préférence d'hydroxyde d'aluminium, et de 5 à 50 % en poids, en particulier 10 à 40 % en poids, de préférence 10 à 30 % en poids de liant à base de magnésie dont, de préférence 2,5 à 25 % en poids, en particulier 5 à 20 % en poids, de préférence 5 à 15 % en poids d'oxyde de magnésium ainsi que 2,5 % à 25 % en poids, en particulier 5 à 20 % en poids, de préférence 5 à 15 % en poids de sulfate de magnésium et/ou de chlorure de magnésium.

5. Élément de protection contre le feu selon la revendication 4, **caractérisé par le fait que** le mélange de substance se déshydratant sous l'effet de la chaleur et de liant à base de magnésie présente une composition d'environ 80 % en poids d'hydroxyde d'aluminium, environ 10 % en poids d'oxyde de magnésium et environ 10 % en poids de sulfate de magnésium.

6. Élément de protection contre le feu selon l'une des revendications 1 à 5, **caractérisé par le fait que** l'hydroxyde se déshydratant sous l'effet de la chaleur est présent dans une quantité de 0,2 kg/m2 à 3,0 kg/m2, en particulier de 0,2 kg/m2 à 1,5 kg/m2, de préférence de 0,4 kg/m2 à 0,8 kg/m2.

7. Élément de protection contre le feu selon l'une des revendications 1 à 6, **caractérisé par le fait que** la substance se déshydratant sous l'effet de la chaleur ou le mélange de substance se déshydratant sous l'effet de la chaleur et d'un liant non combustible, comme de préférence du verre soluble, du sol de silice ou un liant à base de magnésie, est réparti dans le plan sous forme de bandes, en particulier de méandres ou de zigzags et/ou sous forme de points.

8. Élément de protection contre le feu selon l'une des revendications 1 à 7, **caractérisé par le fait que** le gypse présente une épaisseur de 3 à 20 mm, en particulier de 5 à 15 mm, de préférence de 10 à 13 mm.

9. Élément de protection contre le feu selon l'une des revendications 1 à 8, **caractérisé par le fait que** le gypse se présente sous la forme d'un carton de gypse résistant au feu.

10. Élément de protection contre le feu selon l'une quelconque des revendications 1 à 9 , **caractérisé par le fait que** l'élément de protection contre le feu (1 ; 1') se présente sous la forme d'une plaque.

11. Élément de protection contre le feu selon l'une quelconque des revendications 1 à 10, **caractérisé par le fait que** l'élément de protection contre le feu (1 ; 1') se compose d'au moins deux couches de produit en laine minérale liée (2 ; 2'), entre lesquelles au moins une couche (3 ; 3') en gypse est disposée.

12. Utilisation de l'élément de protection contre le feu (1 ; 1') selon l'une des revendications 1 à 11 comme garniture pour des portes coupe-feu ou des armoires coupe-feu.
